# EUROPEAN PATENT APPLICATION

(11) **EP 4 733 731 A1**
(43) Date of publication of application: **29.04.2026**
(21) Application number: 24306795.6
(22) Date of filing: 24.10.2024
(51) Int. Cl.: G01M 3/38, G01N 21/90, G06T 7/00, G01N 21/35, G01N 21/88

(54) **VISION INSPECTION SYSTEM AND METHOD FOR DETECTING FOOD CONTAMINATS IN A SEALING SEAM OF SEALED TRAY PACKAGINGS OF FOOD PRODUCTS**

(71) Applicant: Bizerba Luceo SAS, 35772 Vern-sur-Seiche Cedex (FR)
(72) Inventor: PIROT, Eric, 35510 Cesson-Sévigné (FR); BRULE, Emmanuel, 35470 Pléchatel (FR); SANCHEZ VIERA, Celso Raul, 72210 Maigné (FR); PERSON, Mikael, 35340 Liffré (FR); MIOSSEC, Benjamin, 35230 Bourgbarré (FR); RIGUET, Nicolas, 35230 Noyal Chatillon sur Seiche (FR)
(74) Representative: Manitz Finsterwald Patent- und Rechtsanwaltspartnerschaft mbB

(57) **Abstract**

A vision inspection system for detecting food contaminants in a sealing seam of sealed tray packagings of food products comprises a transportation system configured to transport the sealed tray packagings along a transport path, an image sensor system configured to take images of the sealed tray packagings as the sealed tray packagings are transported along the transport path by the transportation system, and an evaluation unit configured to detect food contaminants in the sealing seam of the sealed tray packagings based on the images of the sealed tray packagings taken by the image sensor system. For taking the images of the sealed tray packagings, the image sensor system includes a lighting, the lighting having a light emitter, and a camera, wherein the light emitter and the camera are arranged on two mutually opposed sides of the transport path. The lighting is configured to irradiate the camera with short-wavelength infrared (SWIR) light with a peak wavelength in the range of 1.40 µm to 1.65 µm and/or 1.85 µm to 2.10 µm, and the camera is an SWIR camera sensible to the infrared light and is configured to receive the infrared light transmitted through the sealed tray packagings.

## Description

### FIELD

The invention relates to a vision inspection system for detecting food contaminants in a sealing seam of sealed tray packagings of food products, the vision inspection system comprising a transportation system, in particular a conveyor, configured to transport the sealed tray packagings along a transport path, an image sensor system configured to take images of the sealed tray packagings as the sealed tray packagings are transported along the transport path by the transportation system, and an evaluation unit configured to detect food contaminants in the sealing seam of the sealed tray packagings based on the images of the sealed tray packagings taken by the image sensor system.

### BACKGROUND

In food industry, sealed tray packagings are used for packaging food products. In such packagings, the food product is placed on a tray and sealed with a lidding film. The packaging may be a vacuum seal packaging or a modified atmosphere packaging using gases such as carbon dioxide (CO2) and/or nitrogen (N2) for achieving optimum freshness and longer shelf life. Defective packagings result in food deterioration. Thus, defective packagings must be avoided. A primary reason for a defective packaging is a part of the packaged food product itself getting jammed between the tray and the lidding film of the sealed tray packaging in the region of the sealing seam. Since the jammed food product could create a leakage path for air in the sealing seam, the food product could be exposed to the environment outside the sealed tray packaging resulting in faster deterioration of the food product than predicated by its expiry date.

In a known vision inspection system as mentioned above, the sealed tray packagings are transported through the field of view of a camera and are illuminated by LEDs. An evaluation unit analyzes the images of the sealed tray packagings and is able to detect a jammed food product in the sealing seam of the sealed tray packagings. However, food contaminants such as a jammed food product cannot always be detected reliably by using such a vision inspection system.

For this reason, it is an object of the present invention to provide a vision inspection system that allows to detect food contaminants in a sealing seam of sealed tray packagings with high reliability.

### SUMMARY

This object is satisfied by a vision inspection system according to claim 1, wherein, for taking the images of the sealed tray packagings, the image sensor system includes a lighting, the lighting having a light emitter, and a camera, wherein the light emitter and the camera are arranged on two mutually opposed sides of the transport path, the lighting being configured to irradiate the camera with short-wavelength infrared (SWIR) light with a peak wavelength in the range of 1.40 µm to 1.65 µm and/or 1.85 µm to 2.10 µm, and the camera being an SWIR camera sensible to the infrared light and being configured to receive the infrared light transmitted through the sealed tray packagings.

Thus, instead of using a camera that is sensible to light in the visible spectrum as known from the prior art, the invention makes use of an SWIR camera sensible to light in the short-wavelength infrared spectrum. Short-wavelength infrared light is able to travel rather unimpeded through the tray and the lidding film of a sealed tray packaging even if the tray and/or the lidding film is not transparent but translucent or opaque in the visible spectrum. Short-wavelength infrared light, however, is significantly absorbed by the food product in the sealed tray packaging due to the water content in the food product. In the short-wavelength infrared range, liquid water has absorption bands in its absorption spectrum around 1.45 µm and around 1.92 µm. The absorption band at 1.45 µm results from an O-H stretching vibration of the water molecule, and the absorption band at 1.92 µm results from a combination of an O-H stretching vibration and H-O-H bending vibration.

Thus, an image section (or image sections) depicting the food product appears darker in an image of the sealed tray packaging taken by the image sensor system or the SWIR camera, respectively, compared to a remainder of the image. Thus, if the image of the sealed tray packaging reveals that part of the food product resides in the sealing seam of the sealed tray packaging, it can be concluded that this part of the food product got jammed between the tray and the lidding film of the sealed tray packaging in the region of the sealing seam. The sealed tray packaging may then be discarded.

The peak wavelength is the wavelength at which the emission spectrum of the lighting reaches its maximum. The light emitter may comprise first and second types of light sources, the first type of light source having a peak wavelength in the range of 1.40 µm to 1.65 µm and the second type of light source having a peak wavelength in the range of 1.85 µm to 2.10 µm.

In an embodiment, the vision inspection system further comprises a rejection system configured to automatically reject a sealed tray packaging if food contaminants are detected in the sealing seam of the sealed tray packaging. This allows a high level of automatization of the vision inspection system. Alternatively, the vision inspection system may merely report defective packagings, wherein reported defective packagings are verified by an operator before being rejected.

Since, typically, consecutive sealed tray packagings are not transported past the SWIR camera with exactly the same position and orientation but are often slightly shifted and/or rotated with respect to each other, the pixels which represent the sealing seam in the images of the sealed tray packagings vary from sealed tray packaging to sealed tray packaging, i.e. some pixels represent the sealing seam in one image but do not in another image, and vice versa. Thus, in another embodiment, the evaluation unit is configured to identify the pixels representing the sealing seam in the images of the sealed tray packagings by first recognizing edges of the sealed tray packagings and then determining the position of the sealing seam in the images of the sealed tray packagings based on position data of the sealing seam relative to the edges of the sealed tray packagings, the position data being stored in a data memory of the evaluation unit, and/or by means of object recognition. Recognizing edges and determining the position of the sealing seam is advantageous in case there is only little contrast in the images of the sealed tray packagings between the area representing the sealing seam and the non-sealing-seam area, and object recognition is advantageous in case there is pronounced contrast.

In particular, the position data include the size and/or the shape of the sealing seam of the sealed tray packagings and/or the distance of the sealing seam to the edges of the sealed tray packagings. In case of object recognition, knowledge about said size, shape and/or distance allows faster and more reliable identification of the pixels representing the sealing seam in the images of the sealed tray packagings.

In another embodiment, the evaluation unit is configured to detect food contaminants in the sealing seam of the sealed tray packaging based on the intensity of the pixels representing the sealing seam in the images of the sealed tray packagings. In particular, the evaluation unit may be configured to detect food contaminants in the sealing seam of the sealed tray packaging if the pixels representing the sealing seam in the images of the sealed tray packagings comprise pixels having an intensity below a prescribed intensity. As mentioned above, pixels representing the food product appears darker in an image than pixels not representing the food product.

In another embodiment, the image sensor system is configured to take at least two images, in particular exactly two images, of each sealed tray packaging, the images being based on different signal strengths, in particular different digital gains, different exposure times, different lighting intensities and/or different lighting durations, wherein the evaluation unit is configured to detect food contaminants in the sealing seam of the sealed tray packagings based on one of the least two images only. In particular, the evaluation unit is configured to choose the one image based on a prescribed image quality criterion. Such practice is advantageous if the opacity of the trays is not constant from tray to tray. This may even happen within a group of trays produced in the same batch. In other words, the sealed tray packagings may appear darker or lighter from one tray to another tray. In such case, taking at least two images of each sealed tray packaging being based on different signal strengths allows to choose the image which has the best image quality, in particular the better image quality in case of exactly two signal strengths, in terms of brightness. The digital gain increases all pixel values of the image and is applied after the pixel signals from the sensor of the camera are converted into digital values.

In another embodiment, the image quality criterion is the mean grey level of all pixels representing the sealing seam in at least two images of each sealed tray packaging. In particular, the evaluation unit is configured to choose the one image such that its mean grey level comes closest to a prescribed mean grey level value and/or is below a prescribed mean grey level threshold. Said mean grey level turned out to be the most suitable criterion for assessing image quality.

In another embodiment, the image sensor system is configured to vary the signal strengths, in particular the digital gains, the exposure times, the lighting intensities and/or the lighting durations, of the images of the sealed tray packagings based on the type of tray of the sealed tray packagings. The image sensor system may be used for inspecting a first type of sealed tray packagings and then be changed to be used for inspecting a second type of sealed tray packagings, wherein the first and second types of sealed tray packagings have different types of trays. Usually, different types of trays have different opacity. Types of trays with higher opacity require higher signal strengths and types of trays with lower opacity require lower signal strengths to achieve best image quality.

In another embodiment, the SWIR camera is a linescan camera, also called a linear camera. A linescan camera uses a strip of sensors to image in one dimension, i.e. produce a linear image, wherein a two-dimensional image is acquired by transporting the sealed tray packagings past the linescan camera and taking a series of linear images that are assembled to result in the two-dimensional image. A linescan camera allows high transport speeds for the sealed tray packagings and, thus, high throughput rates. In addition, illumination is easier to customize than with an area scan camera, where the entire sealed tray packagings have to be illuminated.

In another embodiment, the lighting is configured to emit short-wavelength infrared light with a peak wavelength in the range of 1.50 µm to 1.65 µm, in particular with a peak wavelength of 1.55 µm. This allows to achieve a higher contrast in the images of the sealed tray packagings.

In another embodiment, the light emitter comprises at least one light-emitting diode (LED), i.e. one or a plurality of light-emitting diodes. Light-emitting diodes are moderately narrowband light emitters with an approximately Gaussian spectral shape and, thus, are well suitable for detecting food contaminants in a sealing seam of sealed tray packagings of food products. Alternatively, the light emitter may comprise a halogen lamp. The lighting may have an optical bandpass filter arranged between the light emitter and the camera to narrow the emission spectrum of the light emitter. The optical bandpass filter may be arranged on either side of the transport path.

In another embodiment, the SWIR camera is sensible to short-wavelength infrared light with wavelengths in a range that includes the wavelength of 1.45 µm but excludes the wavelength of 1.92 µm, in particular in the range between 1.0 µm and 1.7 µm. Although the absorption band of water around 1.92 µm is more pronounced than the absorption band around 1.45 µm and, thus, even better suitable for detecting food contaminants in a sealing seam of sealed tray packagings of food products, only higher priced SWIR cameras are sensible to wavelengths around 1.92 µm.

The present invention further provides a method for detecting food contaminants in a sealing seam of sealed tray packagings of food products by a vision inspection system, the method comprising transporting the sealed tray packagings along a transport path by a transportation system, taking images of the sealed tray packagings by an image sensor system as the sealed tray packagings are transported along the transport path by the transportation system, and detecting food contaminants in the sealing seam of the sealed tray packagings by an evaluation unit based on the images of the sealed tray packagings taken by the image sensor system, wherein taking the images of the sealed tray packagings comprises irradiating the camera with short-wavelength infrared (SWIR) light with a peak wavelength in the range of 1.40 µm to 1.65 µm and/or 1.85 µm to 2.10µm by a lighting having a light emitter arranged on one side of the transport path, and receiving the infrared light transmitted through the sealed tray packagings by an SWIR camera sensible to the infrared light and arranged on the other side of the transport path opposite of the one side.

Advantageous embodiments of the method result in an analogous manner from the embodiments of the vision inspection system according to the invention.

The foregoing embodiments and attendant advantages will become more apparent from the description provided herein. It should be understood that the description and specific examples are intended for purposes of illustration only and are not intended to limit the scope of the present invention.

### DRAWINGS

The drawings described herein are for illustration purposes only and are not intended to limit the scope of the present invention in any way.
- Fig. 1: is a schematic view of a vision inspection system in accordance with the present invention;
- Fig. 2: shows an image of a sealed tray packaging and an enlarged detail thereof;
- Fig. 3: shows images (a) of a first sealed tray packaging and (b) a second sealed tray packaging, the two images having the same exposure time;
- Fig. 4: shows images of a sealed tray packaging (a) having a first exposure time- and (b) having a second exposure time;
- Fig. 5: shows the emission spectra of light emitting diodes (a) having a peak wavelength of 1.45 µm and (b) having a peak wavelength of 1.55 µm; and
- Fig. 6: shows the transmission spectra of three different food products.

### DETAILED DESCRIPTION

The following description is merely exemplary in nature and is not intended to limit the present invention, application, or uses. It should be understood that throughout the drawings, corresponding reference numerals indicate like or corresponding parts and features.

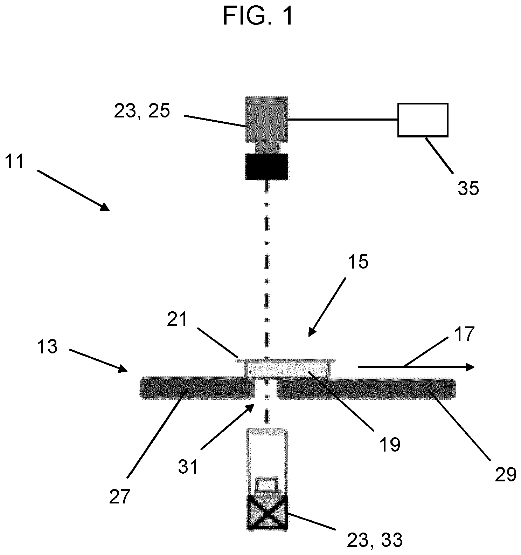

Referring now to Fig. 1, a vision inspection system 11 is illustrated. The vision inspection system 11 comprises a conveyor 13 as a transportation system. The conveyor 13 transports sealed tray packagings 15 of food products along a transport path 17. Each sealed tray packaging 15 of a food product includes a tray 19 and a lidding film 21 sealed to the tray 19. Thus, the food products are packed airtight within the sealed tray packagings 15.

The vision inspection system 11 further comprises an image sensor system 23 configured to take images of the sealed tray packagings 15 when the sealed tray packagings 15 are transported along the transport path 17. The image sensor system 23 includes a camera 25 that is arranged on the top side of the conveyor 13 and is directed towards the conveyor 13 and towards the top side of the sealed tray packagings 15 transported by the conveyor 13. The conveyor 13 comprises two conveyor bands 27, 29 arranged in series having a gap 31 therebetween.

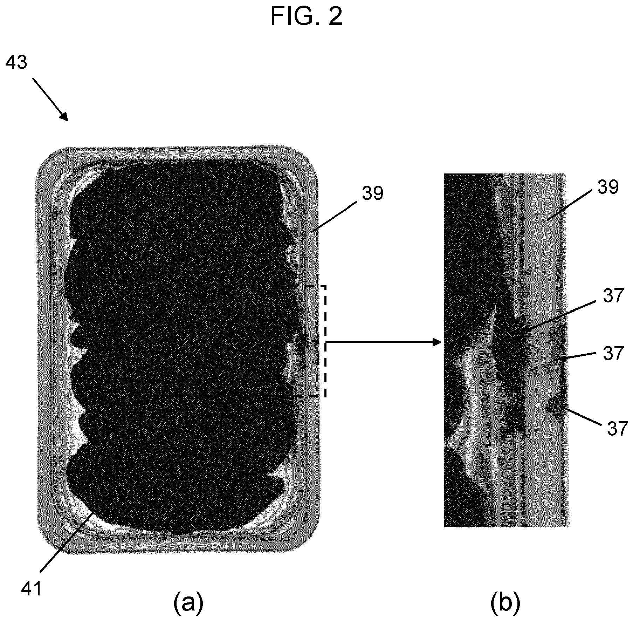

The image sensor system 23 further includes a backlight 33 as a light emitter, in particular at least one light emitting diode (LED), that is arranged on the bottom side of the conveyor 13 and is directed towards the bottom side of the sealed tray packagings 15 through the gap 31 of the conveyor 13. The infrared light emitted by the backlight 33 passes through the sealed tray packagings 15 and - after being transmitted through the sealed tray packagings 15 - is then received by the camera 25 for taking images of the sealed tray packagings 15. The backlight 33 emits short-wavelength infrared light (SWIR) with a peak wavelength of 1.55 µm and/or 1.92 µm, and the camera 25 is an SWIR camera sensible to the emitted infrared light. The camera 25 is a linescan or linear camera 25 that takes a series of linear images of a sealed tray packaging 15 while the sealed tray packaging 15 is transported past the camera 25, the series of linear images being assembled to a two-dimensional image (as shown e.g. in Fig. 2). It is also possible that the camera 25 is arranged on the bottom side of the conveyor 13 and that the backlight 33 is arranged on the top side of the conveyor 13. The backlight 33 is part of a lighting that may further comprise an optical bandpass filter to narrow the emission spectrum of the backlight 33.

The vision inspection system 11 further comprises an evaluation unit 35 connected to the camera 25. The evaluation unit 35 is able to detect food contaminants 37 in a sealing seam 39, which is the connecting seam between the lidding film 21 and the tray 19, of a sealed tray packaging 15 of a food product 41 based on a two-dimensional image 43 of the sealed tray packaging 15 taken by the image sensor system 23 as is explained hereafter with reference to Fig. 2.

The short-wavelength infrared light emitted by the backlight 33 passes through the tray 19 and the lidding film 21 of the sealed tray packaging 15, being slightly absorbed by the tray 19 and the lidding film 21. The short-wavelength infrared light, however, is significantly absorbed by the food product 41 due to its water content. In the short-wavelength infrared range, liquid water has absorption bands around 1.45 µm and around 1.92 µm. Thus, the food product 41 appears darker in the image 43 of the sealed tray packaging 15.

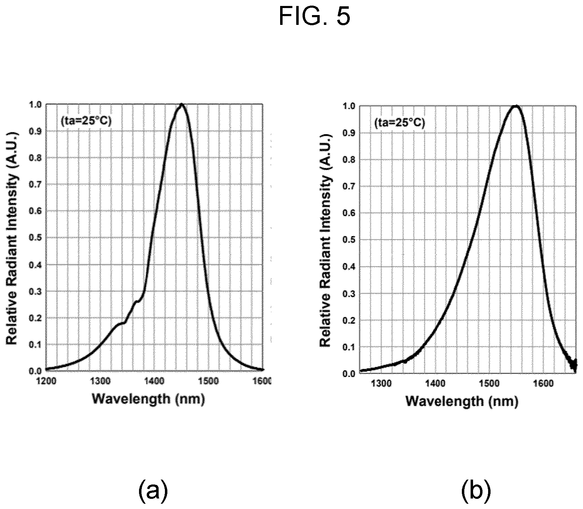

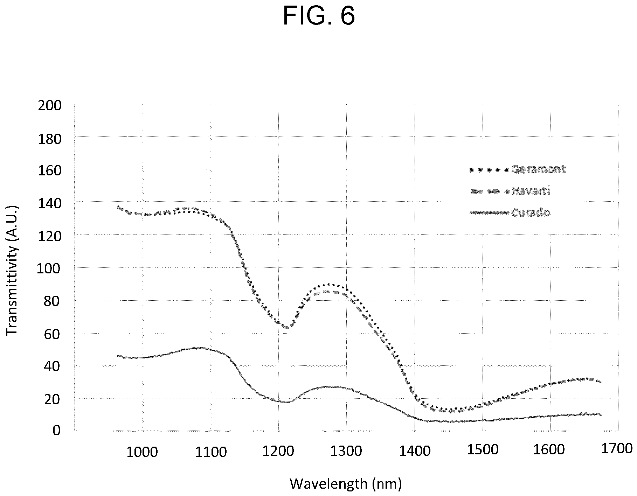

Although the lower absorption band of liquid water is around 1.45 µm, it is preferred to use short-wavelength infrared light with a peak wavelength of 1.55 µm instead of 1.45 µm. In Fig. 5, the emission spectra (relative radiant intensity in arbitrary units) at an ambient temperature ta of 25°C (a) of an LED having a peak wavelength of 1.45 µm and (b) of an LED having a peak wavelength of 1.55 µm are shown. As can be seen in Fig. 5, the LEDs do not emit light with a sharp peak wavelength but emit light with a somewhat broader wavelength distribution. In Fig. 6, the transmission spectra (transmittivity in arbitrary units) of three different kinds of cheese for short-wavelength infrared light in the range of approximately 950 µm to 1.675 µm are shown. It can be taken from Fig. 6 that, at a wavelength of 1.45 µm, the transmission of infrared light through the food products is lowest, i.e. the absorption is highest, due to the lower absorption band of liquid water at around 1.45 µm, and that there is a broad maximum of transmittivity at wavelengths in the range of approximately 1.20 µm to 1.40 µm. Since an LED with a peak wavelength of 1.45 µm emits a significant amount of light at wavelengths between 1.20 µm and 1.40 µm, and an LED with a peak wavelength of 1.55 µm does not, a higher contrast of the image 43 can be achieved by using an LED with a peak wavelength of 1.55 µm.

In Fig. 2, the food product 41, however, is not situated only inside of the sealing seam 39 that frames the food product 41 but part of the food product 41 got jammed between the tray 19 and the lidding film 21 of the sealed tray packaging 15 in the region of the sealing seam 39 and, thus, constitutes the food contaminants 37 in the sealing seam 39 mentioned above. As explained above, the food contaminants 37 appear darker than in the unaffected area of the sealing seam 39. Thus, it can be concluded that food contaminants 37 are present in the sealing seam 39 when some of the pixels representing the sealing seam 39 in the image 43 have an intensity significantly lower than other pixels representing the sealing seam 39, in particular have an intensity below a prescribed intensity threshold if the opacity of the trays 19 does not vary from tray to tray.

To identify the pixels representing the sealing seam 39 in the images 43 of the sealed tray packagings 15, the evaluation unit 35 first recognizes the edges of the sealed tray packagings 15 and then calculates the position of the sealing seam 39 in the images 43 of the sealed tray packagings 15 based on knowledge about the size and the shape of the sealing seam 39 of the sealed tray packagings 15 and the distance of the sealing seam 39 to the edges of the sealed tray packagings 15. The size, shape and distance represent position data that is stored in a data memory of the evaluation unit 35. In addition or alternatively, the evaluation unit 35 may use object recognition to identify the pixels representing the sealing seam 39 in the images 43 of the sealed tray packagings 15.

The food contaminants 37, however, could create a leakage path for air in the sealing seam 39. Thus, the food product 41 is exposed to air and will now deteriorate faster than indicated by its expiry date which is usually printed on a label attached to the sealed tray packaging 15. Therefore, the sealed tray packaging 15 is defective and must be discarded or rejected, either automatically by the vision inspection system 11 or after verification by an operator of the vision inspection system 11.

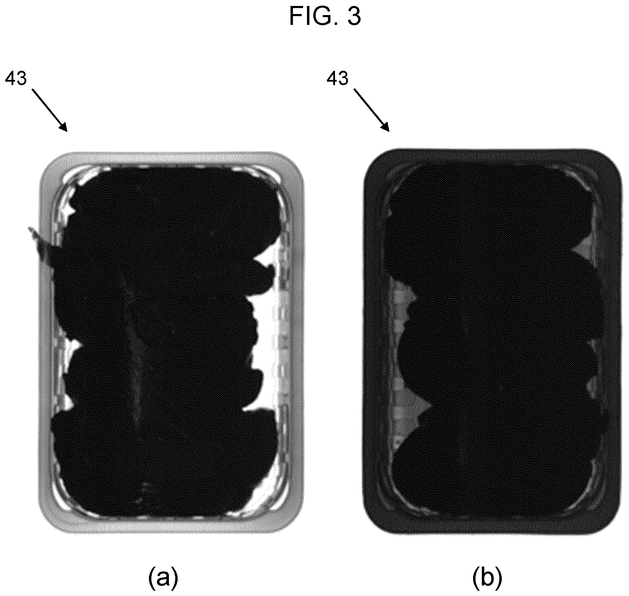

Fig. 3 shows images 43 of first and second sealed tray packagings 15 having trays 19 of the same type and provided by the same manufacturer. The two images 43 have the same exposure time. It appears that the opacity of the trays 19 has a certain influence on the brightness of the images 43 and that the opacity of the trays 19 is not the same - although the trays 19 are of the same type and provided by the same manufacturer - since the image 43 of the second sealed tray packaging 15 shown in (b) is darker than the image 43 of the first sealed tray packaging 15 shown in (a). It is assumed that the manufacturer of the trays 19 either experiences fluctuations in production or uses varying raw materials.

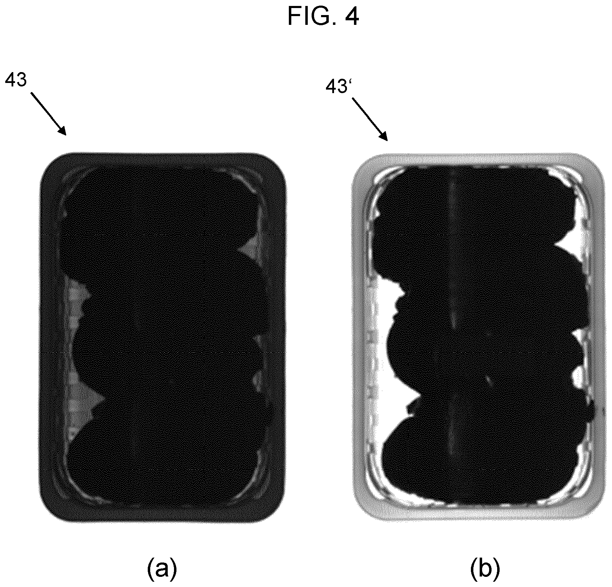

To resolve such issue, if existent, the image sensor system 23 may take two (or more than two) images 43, 43' of a sealed tray packaging 15, wherein the two images 43, 43' have different exposure times as shown in Fig. 4 and, thus, are based on different signal strengths. The image 43 shown in (a) with the shorter first exposure time is darker that the image 43' shown in (b) with the longer second exposure time. Obviously, in the case shown in Fig. 4, the image 43' with the longer exposure time has better image quality and, thus, is better suitable for detecting food contaminants 37 in a sealing seam 39 of sealed tray packagings 15 of food products 41 than the image 43 with the shorter exposure time. In the case shown in Fig. 4, the image quality is given by the mean grey level of all pixels representing the sealing seam 39 in the two images 43, 43'. In the image 43' the mean grey level comes closer to a prescribed mean grey level value than in the image 43 and/or in the image 43' the mean grey level is below a prescribed mean grey level threshold, whereas in image 43 it isn't. Thus, the image 43' is chosen for the further vision inspection by the evaluation unit 35.

In general, the image sensor system 23 may be configured to vary the exposure times of the images 43 of the sealed tray packagings 15 based on the type of tray 19 of the sealed tray packagings 15 since types of trays with higher opacity require longer exposure times and types of trays 19 with lower opacity require shorter exposure times to achieve satisfactory image quality.

Those skilled in the art can now appreciate from the foregoing description that the broad teachings of the present invention can be implemented in a variety of forms. Therefore, while this invention has been described in connection with particular examples thereof, the true scope of the invention should not be so limited since other modifications will become apparent to the skilled practitioner upon a study of the drawings, the specification and the following claims.

### Reference numeral list

- 11: vision inspection system
- 13: conveyor
- 15: sealed tray packaging
- 17: transport path
- 19: tray
- 21: lidding film
- 23: image sensor system
- 25: camera
- 27: conveyor band
- 29: conveyor band
- 31: gap
- 33: backlight
- 35: evaluation unit
- 37: food contaminants
- 39: sealing seam
- 41: food product
- 43: image
- 43': image

## Claims

1. Vision inspection system for detecting food contaminants (37) in a sealing seam (39) of sealed tray packagings (15) of food products (41), the vision inspection system comprising
a transportation system (13) configured to transport the sealed tray packagings (15) along a transport path (17),
an image sensor system (23) configured to take images (43) of the sealed tray packagings (15) as the sealed tray packagings (15) are transported along the transport path (17) by the transportation system (13), and
an evaluation unit (35) configured to detect food contaminants (37) in the sealing seam (39) of the sealed tray packagings (15) based on the images (43) of the sealed tray packagings (15) taken by the image sensor system (23),
**characterized in that**,
for taking the images (43) of the sealed tray packagings (15),
the image sensor system (23) includes a lighting, the lighting having a light emitter (33), and a camera (25), wherein the light emitter (33) and the camera (25) are arranged on two mutually opposed sides of the transport path (17),
the lighting being configured to irradiate the camera (25) with short-wavelength infrared (SWIR) light with a peak wavelength in the range of 1.40 µm to 1.65 µm and/or 1.85 µm to 2.10 µm, and
the camera (25) being an SWIR camera (25) sensible to the infrared light and being configured to receive the infrared light transmitted through the sealed tray packagings (15).

2. The vision inspection system of claim 1, further comprising a rejection system configured to automatically reject a sealed tray packaging (15) if food contaminants are detected in the sealing seam (39) of the sealed tray packaging (15).

3. The vision inspection system of claim 1 or claim 2, wherein the evaluation unit (35) is configured to identify the pixels representing the sealing seam (39) in the images (43) of the sealed tray packagings (15) by first recognizing edges of the sealed tray packagings (15) and then determining the position of the sealing seam (39) in the images (43) of the sealed tray packagings (15) based on position data of the sealing seam (39) relative to the edges of the sealed tray packagings (15), the position data being stored in a data memory of the evaluation unit (35), and/or by means of object recognition.

4. The vision inspection system of claim 3, wherein the position data include the size and/or the shape of the sealing seam (39) of the sealed tray packagings (15) and/or the distance of the sealing seam (39) to the edges of the sealed tray packagings (15).

5. The vision inspection system of any one of the preceding claims, wherein the evaluation unit (35) is configured to detect food contaminants (37) in the sealing seam (39) of the sealed tray packaging (15) based on the intensity of the pixels representing the sealing seam (39) in the images (43) of the sealed tray packagings (15).

6. The vision inspection system of claim 5, wherein the evaluation unit (35) is configured to detect food contaminants (37) in the sealing seam (39) of the sealed tray packaging (15) if the pixels representing the sealing seam (39) in the images (43) of the sealed tray packagings (15) comprise pixels having an intensity below a prescribed intensity threshold.

7. The vision inspection system of any one of the preceding claims, wherein the image sensor system (23) is configured to take at least two images of each sealed tray packaging (15), the images being based on different signal strengths, in particular different digital gains, different exposure times, different lighting intensities and/or different lighting durations, wherein the evaluation unit (35) is configured to detect food contaminants (37) in the sealing seam (39) of the sealed tray packagings (15) based on one of the least two images only.

8. The vision inspection system of claim 7, wherein the evaluation unit (35) is configured to choose the one image based on a prescribed image quality criterion.

9. The vision inspection system of claim 8, wherein the image quality criterion is the mean grey level of all pixels representing the sealing seam (39) in the at least two images of each sealed tray packaging (15).

10. The vision inspection system of claim 9, wherein the evaluation unit (35) is configured to choose the one image such that its mean grey level comes closest to a prescribed mean grey level value and/or is below a prescribed mean grey level threshold.

11. The vision inspection system of any one of the preceding claims, wherein the image sensor system (23) is configured to vary the signal strengths, in particular the digital gains and/or the exposure times, of the images (43) of the sealed tray packagings (15) based on the type of tray (19) of the sealed tray packagings (15).

12. The vision inspection system of any one of the preceding claims, wherein the SWIR camera (25) is a linescan camera (25).

13. The vision inspection system of any one of the preceding claims, wherein the lighting is configured to emit short-wavelength infrared light with a peak wavelength in the range of 1.50 µm to 1.65 µm, in particular with a peak wavelength of 1.55 µm.

14. The vision inspection system of any one of the preceding claims, wherein the light emitter (33) comprises at least one light-emitting diode (LED).

15. The vision inspection system of any one of the preceding claims, wherein the SWIR camera (25) is sensible to short-wavelength infrared light with wavelengths in a range that includes the wavelength of 1.45 µm but excludes the wavelength of 1.92 µm, in particular in the range between 1.0 µm and 1.7 µm.

16. A method for detecting food contaminants (37) in a sealing seam (39) of sealed tray packagings (15) of food products (41) by a vision inspection system (11), the method comprising
transporting the sealed tray packagings (15) along a transport path (17) by a transportation system (13),
taking images (43) of the sealed tray packagings (15) by an image sensor system (23) as the sealed tray packagings (15) are transported along the transport path (17) by the transportation system (13), and
detecting food contaminants (37) in the sealing seam (39) of the sealed tray packagings (15) by an evaluation unit (35) based on the images (43) of the sealed tray packagings (15) taken by the image sensor system (23),
**characterized by** taking the images (43) of the sealed tray packagings (15) comprises
irradiating the camera (25) with short-wavelength infrared (SWIR) light with a peak wavelength in the range of 1.40 µm to 1.65 µm and/or 1.85 µm to 2.10 µm by a lighting having a light emitter (33) arranged on one side of the transport path (17), and
receiving the infrared light transmitted through the sealed tray packagings (15) by an SWIR camera (25) sensible to the infrared light and arranged on the other side of the transport path (17) opposite of the one side.
